# EUROPÄISCHE PATENTANMELDUNG

(11) **EP 2 523 324 A1**
(43) Veröffentlichungstag der Anmeldung: **14.11.2012**
(21) Anmeldenummer: 11165623.7
(22) Anmeldetag: 11.05.2011
(51) Int. Cl.: H02M 1/12, H02M 5/458, H02M 1/32

(54) **Frequenzumrichter mit Kommutierungsdrosseln und Verfahren zum Betreiben desselben**

(71) Anmelder: SIEMENS AKTIENGESELLSCHAFT, 80333 München (DE)
(72) Erfinder: Benesch, Norbert, 90562, Heroldsberg (DE); Dillig, Reinhold, 96117, Memmelsdorf (DE); Herrmann, Bernd, 91074, Herzogenaurach (DE); Lorz, Roland, 91341, Röttenbach (DE); Roppelt, Bernd, 96191, Viereth-Trunstadt (DE); Schierling, Hubert, 91052, Erlangen (DE); Schwinn, Thomas, 91074, Herzogenaurach (DE)

(57) **Zusammenfassung**

Bei einem Frequenzumrichter (26) kann durch Drosseln (L₁, L₂, L₃) eine Überspannung induziert werden, wenn ein aus einem Versorgungsnetz (14) in einen Einspeise-Gleichrichter (28) des Frequenzumrichters (26) fließender Strom abrupt unterbrochen wird. Es ist Aufgabe der vorliegenden Erfindung, für einen Frequenzumrichter (26) einen Schutz vor einer solchen Überspannung bereitzustellen. Bei dem erfindungsgemäßen Frequenzumrichter (26) sind bei zumindest einer Drossel (L₁, L₂, L₃) ein erster und ein zweiter Anschluss (A₁, A₂) der Drossel (L₁, L₂, L₃) über einen Freilauf-Schaltungszweig (Z₁, Z₂, Z₃) wahlweise miteinander elektrisch verbindbar. Gemäß dem erfindungsgemäßen Verfahren wird für den Fall, dass ein Strom in dem Frequenzumrichter (26) unterbrochen wird, mittels des Freilauf-Schaltungszweigs (Z₁, Z₂, Z₃) der erste Anschluss (A₁) der Drossel (L₁, L₂, L₃) mit deren zweiten Anschluss (A₂) elektrisch verbunden und hierdurch ein Strom von dem zweiten Anschluss (A₂) über den Freilauf-Schaltungszweig (Z₁, Z₂, Z₃) zu dem ersten Anschluss (A₁) geführt.

## Beschreibung

Die Erfindung betrifft einen Frequenzumrichter zum Betreiben einer elektrischen Maschine an einem elektrischen Versorgungsnetz. Der Frequenzumrichter weist einen Einspeise-Gleichrichter auf, dem an zumindest einem netzseitigen Wechselspannungs-Eingang eine Drossel vorgeschaltet ist. Ein Frequenzumrichter mit einem Einspeise-Gleichrichter ist aus der DE 197 39 553 A1 bekannt. Drosselspulen sind einem Einspeise-Gleichrichter regelmäßig als Netzfilter oder zum Bereitstellen einer Kommutierungsinduktivität netzseitig vorgeschaltet.

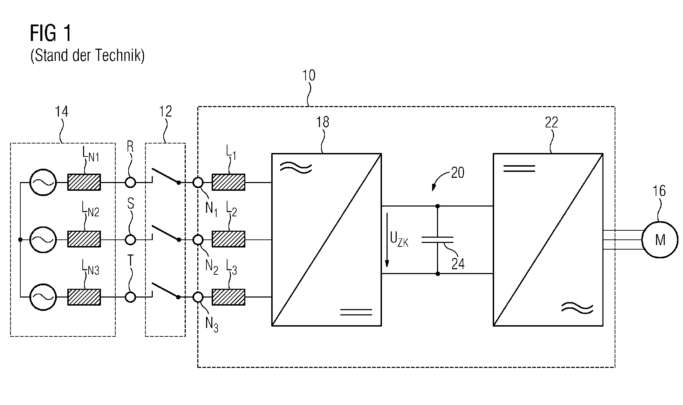

Die prinzipielle Funktionsweise eines Frequenzumrichters ist im Folgenden anhand des in FIG 1 gezeigten Blockschaltbildes näher erläutert. Der gezeigte Frequenzumrichter 10 ist mit Netzanschlüssen N₁, N₂, N₃ an ein Schütz 12 angeschlossen, über welches die Netzanschlüsse N₁, N₂, N₃ mit Netzphasenleitern R, S, T eines Wechselspannungs-Versorgungsnetzes, oder kurz eines Netzes 14, verbunden werden können. An den Frequenzumrichter 10 ist eine elektrische Maschine 16 angeschlossen. Für den Betrieb der elektrischen Maschine 16 kann mittels des Frequenzumrichters 10 aus der Wechselspannung des Netzes 14, die eine fest vorgegebene Frequenz, z.B. 50 Hz oder 60 Hz, aufweist, für die elektrische Maschine 16 eine Wechselspannung mit einstellbarer Frequenz erzeugt werden.

Dazu weist der Frequenzumrichter 10 einen Einspeise-Gleichrichter 18 auf, der die Netz-Wechselspannung in eine gleichgerichtete Spannung, hier als Gleichspannung U_{ZK} bezeichnet, umwandelt. Diese wird in einem Gleichspannungs-Zwischenkreis, oder kurz Zwischenkreis 20, bereitgestellt. Ein Wechselrichter 22 erzeugt dann aus der Gleichspannung U_{ZK} die Wechselspannung für die elektrische Maschine 16.

In dem Zwischenkreis 20 ist durch zumindest einen Zwischenkreiskondensator 24 eine Zwischenkreiskapazität bereitgestellt, durch welche die Gleichspannung U_{ZK} geglättet wird.
Unter einer Zwischenkreiskapazität wird hier eine elektrische Kapazität verstanden, die groß genug ist, um eine bei der beschriebenen Wandlung durch den Einspeise-Gleichrichter 18 erzeugte Welligkeit der Gleichspannung U_{ZK} so weit zu glätten, dass sie den zweiten Wandlungsschritt nicht beeinflusst. Bevorzugt ist die Zwischenkreiskapazität auch groß genug, um bei einem kurzzeitigen Ausfall der Netz-Wechselspannung für einige Millisekunden einen unterbrechungsfreien Betrieb der elektrischen Maschine zu ermöglichen.

Dem Einspeise-Gleichrichter 18 sind netzseitig Drosseln L₁, L₂, L₃ vorgeschaltet. Diese verhindern, dass von dem Einspeise-Gleichrichter 18 bei der Spannungswandlung erzeugte Störsignale als Oberwellen in das Netz 14 übertragen werden. Mit anderen Worten bilden die Drosseln L₁, L₂, L₃ Filter für eine Entstörung. Die Drosseln L₁, L₂, L₃ können eine weitere Funktion haben, wenn der Einspeise-Gleichrichter 18 als Hochsetzsteller betrieben wird, der eine Gleichspannung U_{ZK} mit einem Effektivwert erzeugt, der unabhängig von einem Effektivwert der Netzspannung ist. Die Drosseln L₁, L₂, L₃ sind dann als Kommutierungsinduktivitäten ausgelegt, die verhindern, dass in einem getakteten Betrieb des Einspeise-Gleichrichters 18 erzeugte Kurzschlüsse zwischen den einzelnen Netzphasenleitern R, S, T im Einspeise-Gleichrichter 18 zu einem Kommutierungsstrom mit einer kritischen Stromstärke führen.

Bei einem Frequenzumrichter der beschriebenen Art gibt es das Problem, dass durch die Drosseln L₁, L₂, L₃ und Netzinduktivitäten L_{N1}, L_{N2}, L_{N3} eine sehr große Spannung induziert wird, wenn ein aus den Netz 14 in den Einspeise-Gleichrichter 18 fließender Strom abrupt unterbrochen wird. Grund dafür ist, dass die Spulen der Drosseln L₁, L₂, L₃ die in ihnen gespeicherte magnetische Energie nach dem Prinzip der Induktion in elektrische Energie umwandeln, die dann an den Einspeise-Gleichrichter 18 in Form eines hohen Spannungspulses abgegeben wird. Durch diese Induktionsspannung können Komponenten des Einspeise-Gleichrichters 18 oder des Zwischenkreises 20 beschädigt werden.

Es ist Aufgabe der vorliegenden Erfindung, für einen Frequenzumrichter der genannten Art einen Schutz vor einer Überspannung bereitzustellen.

Die Aufgabe wird durch den Frequenzumrichter gemäß Patentanspruch 1 und durch das Verfahren gemäß Patentanspruch 9 gelöst. Vorteilhafte Weiterbildungen des erfindungsgemäßen Frequenzumrichters und des erfindungsgemäßen Verfahrens sind durch die Unteransprüche gegeben.

Bei dem erfindungsgemäßen Frequenzumrichter ist einem Einspeise-Gleichrichter an zumindest einem netzseitigen Wechselspannungs-Eingang eine Drossel vorgeschaltet. Ein erster und ein zweiter Anschluss der Drossel sind hierbei über einen Freilauf-Schaltungszweig wahlweise miteinander elektrisch verbindbar. Wahlweise bedeutet, dass das Bereitstellen der elektrischen Verbindung von einer Bedingung abhängig gemacht ist, etwa einem bestimmten Steuersignal oder einem bestimmten Spannungswert einer Spannung, die zwischen den beiden Anschlüssen anliegt. Unter einem Schaltungszweig ist eine Schaltungsanordnung aus elektrischen Leitelementen, z.B. Drähten, und elektrischen bzw. elektronischen Bauelementen zu verstehen. Ein solches Bauelement kann z.B. ein Varistor sein, der in dem Schaltungszweig derart verschaltet ist, dass er leitend wird, wenn die Spannung zwischen den Anschlüssen der Drossel über einen bestimmten Schwellenwert steigt.

Gemäß dem erfindungsgemäßen Verfahren wird für den Fall, dass ein Strom in dem Frequenzumrichter unterbrochen wird, mittels des Freilauf-Schaltungszweigs der erste Anschluss der Drossel mit deren zweiten Anschluss elektrisch verbunden und hierdurch ein Stromfluss von dem zweiten Anschluss über den Freilauf-Schaltungszweig zu dem ersten Anschluss ermöglicht.

Der erfindungsgemäße Frequenzumrichter weist den Vorteil auf, dass bei der Unterbrechung des Stromes die Drossel keine Überspannung in dem Einspeise-Gleichrichter oder im Zwischenkreis erzeugt. Durch das Kurzschließen der Drossel wird die in der Drossel gespeicherte Energie in der Drossel selbst durch deren ohmschen Widerstand oder in dem Freilauf-Schaltungskreis beispielsweise in Wärme umgewandelt. Dieser Vorgang wird auch als Freilaufen der Drossel bezeichnet.

Bevorzugt umfasst der Freilauf-Schaltungszweig einen steuerbaren Schalter, insbesondere einen elektrischen oder elektromechanischen Schalter. Dann lässt sich das Zuschalten des Freilauf-Schaltungszweiges, d.h. das Verbinden der beiden Drossel-Anschlüsse, mit weiteren Steuerprozessen synchronisieren.

Zudem ist es vorteilhaft, wenn der Freilauf-Schaltungszweig einen Halbleiterschalter umfasst, der insbesondere aus zumindest einem der folgenden Bauelemente gebildet ist: einem Diac, einem Triac, einem Thyristor oder einem Transistor. Als Thyristor kann z.B. ein GTO-Thyristor (GTO - Gate Turn-off) verwendet werden. Als Transistor kommt hier bevorzugt ein IGBT (Insulated Gate Bipolar Transistor) oder ein FET (Feldeffekttransistor) in Betracht. Halbleiterschalter weisen eine besonders kurze Ansprech- und Schaltzeit auf, so dass ein Freilaufen der Drossel ermöglicht werden kann, bevor eine Induktionsspannung der Drossel Bauelemente des Frequenzumrichters beschädigt.

Mit einem abschaltbaren Halbleiter, wie z.B. einem GTO-Thyristor, lässt sich eine Freilaufphase auch gezielt beenden. Der Freilauf-Schaltungszweig kann auch eine Parallelschaltung aus zwei antiparallel geschalteten Bauelementen oder aus zwei antiparallel geschalteten Reihenschaltungen mehrerer Bauelemente umfassen. Dann kann das Freilaufen ebenfalls gezielt und zuverlässig über ein Steuersignal wieder abgebrochen werden.

Hierdurch kann die Freilauf-Funktionalität auch für eine begrenzte Zeitdauer bereitgestellt werden, wie es beispielsweise für wiederholte Schaltvorgänge nötig sein kann, zwischen denen die Drossel dann jeweils wieder ohne den Freilauf-Schaltungszweig benötigt wird. So lässt sich beispielsweise der Einspeise-Gleichrichter als Hochsetzsteller betreiben und dabei zum einen ein Kommutierungsstrom mittels der Drossel dämpfen und zum anderen die von der Drossel induzierte Spannung beim Schalten des Hochsetzstellers durch einen Freilauf der Drossel verringern.

Ein Schalter mit geringer Ansprech- und Schaltzeit, der einen Freilauf der Drossel unabhängig von einer momentanen Stromrichtung in der Drossel ermöglicht, ergibt sich durch eine Brückenschaltung, bei welcher ein Stromfluss sowohl für eine Flussrichtung als auch in die entgegengesetzte Flussrichtung jeweils über einen Halbleiter-Leistungsschalter und eine Diode führbar ist.

Um während des Freilaufs elektrische Energie in Wärme umzuwandeln, kann der Freilauf-Schaltungszweig ein Widerstandselement aufweisen. Dann kann die Energie auch unabhängig von einem Widerstandswert der Drosselspule innerhalb einer vorbestimmbaren Zeitdauer umgewandelt werden.

Bei einer weiteren Ausführungsform des erfindungsgemäßen Frequenzumrichters ist der Einspeise-Gleichrichter mit einem Gleichspannungs-Zwischenkreis verbunden, in welchem durch zumindest einen Zwischenkreiskondensator eine Zwischenkreiskapazität bereitgestellt ist. Der Gleichspannungs-Zwischenkreis, oder kurz Zwischenkreis, weist hierbei ein Schaltelement auf, das dazu ausgelegt ist, einen Stromfluss aus dem Einspeise-Gleichrichter in den zumindest einen Zwischenkreiskondensator wahlweise zu unterbrechen.

Gemäß einer entsprechenden Weiterbildung des erfindungsgemäßen Verfahrens werden zum Unterbrechen eines Stromflusses in dem Gleichspannungs-Zwischenkreis das Schaltelement in einen sperrenden Zustand geschaltet und vor, mit oder nach dem Schalten des Schaltelements der erste und der zweite Anschluss über den Freilauf-Schaltungszweig elektrisch verbunden. Dann ist kein Stromfluss von dem Einspeise-Gleichrichter in den (zumindest einen) Zwischenkreiskondensator möglich. Zu einer Induktion einer Überspannung führt eine solche Stromunterbrechung dennoch nicht.

Durch das Schaltelement ergibt sich der Vorteil, dass der Zwischenkreis im Fehlerfall (z.B. einem Kurzschluss in der elektrischen Maschine oder einem Durchbruch im Zwischenkreis) vom Einspeise-Gleichrichter getrennt werden kann, so dass dieser nicht durch einen Strom mit einer zu großen Stromstärke beschädigt wird. Ein weiterer Vorteil des Schaltelements besteht darin, dass sich der Zwischenkreiskondensator bei einer Inbetriebnahme des Frequenzumrichters (durch Verbinden mit einem Versorgungsnetz) mittels des Schaltelements gesteuert aufladen lässt und hierbei eine mittlere Stromstärke des Aufladestroms ebenfalls unterhalb einer kritischen Stromstärke gehalten werden kann.

Für den Fall, dass der Zwischenkreis das beschriebene Schaltelement aufweist, kann der Zwischenkreis zusätzlich einen Kommutierungskondensator aufweisen, der unabhängig von einem Schaltzustand des Schaltelements dauerhaft mit dem Einspeise-Gleichrichter elektrisch verbunden ist. Durch den Kommutierungskondensator ist dann eine Kommutierungskapazität für den Einspeise-Gleichrichter bereitgestellt. Hierdurch ergibt sich der Vorteil, dass bei sperrendem Schaltelement die Drossel zusätzlich über den Kommutierungskondensator freilaufen kann, wenn beispielsweise ein Steuersignal für einen Schalter im Freilauf-Schaltungszweig nicht genau mit Steuersignalen des Einspeise-Gleichrichters synchronisiert ist.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger als zehn Prozent, insbesondere weniger als ein Prozent, der Zwischenkreiskapazität. Ein Betrag der Kommutierungskapazität kann auch in Abhängigkeit von einem Induktivitätswert der Drosselspulen und/oder einer Induktivität des Netzes, an das der Frequenzumrichter angeschlossen ist, gewählt sein. Die Kommutierungskapazität kann kleiner als 5 µF sein. Indem die Kommutierungskapazität sehr viel kleiner als die Zwischenkreiskondensator-Kapazität gewählt ist, ist sichergestellt, dass durch einen Ladestrom des Kommutierungskondensators der Einspeise-Gleichrichter bei der Inbetriebnahme des Frequenzumrichters nicht beschädigt wird. Der Kommutierungskondensator kann ein Keramik- oder Folienkondensator sein.

Indem der Freilauf der Drossel hauptsächlich durch den Freilauf-Schaltungszweig ermöglicht wird, kann der Kommutierungskondensator in seiner Kapazität bedeutend kleiner gewählt werden als es der Fall wäre, wenn der Freilauf-Schaltungszweig nicht vorhanden wäre und die Energie der Drossel ausschließlich von der Kommutierungskapazität aufgenommen werden müsste.

Im Folgenden wird die Erfindung anhand von Ausführungsbeispielen näher erläutert. Dazu zeigt:
- FIG 1: eine schematische Darstellung eines an einem elektrischen Versorgungsnetz angeschlossenen Frequenzumrichters gemäß dem Stand der Technik,
- FIG 2: eine schematische Darstellung eines Frequenzumrichters gemäß einer Ausführungsform des erfindungsgemäßen Frequenzumrichters,
- FIG 3: ein Schaltbild einer Parallelschaltung aus zwei antiparallel geschalteten Bauelementen, die in einem Freilauf-Schaltungszweig einer weiteren Ausführungsform des erfindungsgemäßen Frequenzumrichters eingebaut ist, und
- FIG 4: ein Schaltbild einer Brückenschaltung, die in einem Freilauf-Schaltungszweig einer weiteren Ausfüh- rungsform des erfindungsgemäßen Frequenzumrichters eingebaut ist.

Die Ausführungsbeispiele stellen bevorzugte Ausführungsformen der Erfindung dar.

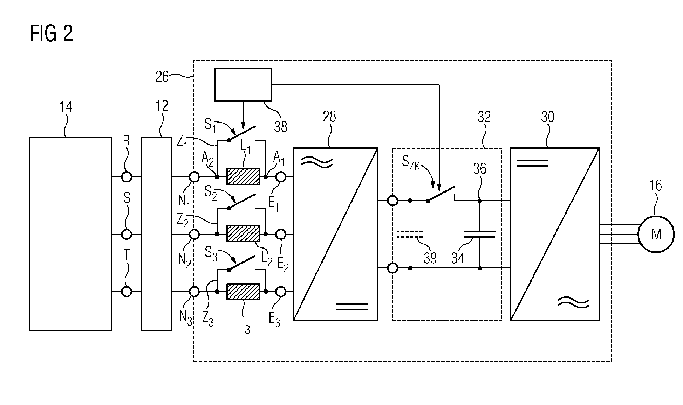

In FIG 2 ist ein Frequenzumrichter 26 gezeigt, über den eine elektrische Maschine 16 mit einem Netz 14 gekoppelt ist. Dem Frequenzumrichter 26 ist netzseitig ein Schütz 12 vorgeschaltet. Das Schütz 12, das Netz 14 und die elektrische Maschine 16 entsprechen den in FIG 1 gezeigten Elementen mit denselben Bezugszeichen.

Der Frequenzumrichter 26 weist einen Einspeise-Gleichrichter 28, einen Wechselrichter 30 und einen den Einspeise-Gleichrichter 28 mit dem Wechselrichter 30 verbindenden Zwischenkreis 32 auf. Der Einspeise-Gleichrichter 28 ist hier durch einen steuerbaren Umrichter bereitgestellt, der auch als Wechselrichter betreibbar ist. Der Wechselrichter 30 ist auch als Gleichrichter betreibbar, so dass beispielsweise zum Abbremsen eines Rotors der elektrischen Maschine 16 eine dabei erzeugte elektrische Energie in den Zwischenkreis 32 übertragen werden kann.

In dem Zwischenkreis 32 befindet sich ein Zwischenkreiskondensator 34. Seine Kapazität kann in dem gezeigten Beispiel größer als 1 mF sein.

Zwischen dem Einspeise-Gleichrichter 28 und einem Anschluss 36 des Zwischenkreiskondensators 34 befindet sich ein Zwischenkreisschalter S_{ZK}. Mit ihm kann ein Strom unterbrochen werden, der von dem Einspeise-Gleichrichter 28 zum Zwischenkreiskondensator 34 oder zum Wechselrichter 30 fließt. Der Zwischenkreisschalter S_{ZK} kann z.B. ein SiC-MOSFET (SiC - Siliziumcarbid; MOS - Metall-Oxid-Halbleiter) oder ein SiC-JFET (JFET - Sperrschicht-FET, Junction-FET) oder ein auf Silizium basierender Transistor (Si-Transistor; Si - Silizium) oder eine Kaskodenschaltung mit einem Si-MOSFET und einem SiC-JFET sein. Bevorzugt ist der Zwischenkreisschalter S_{ZK} ein selbstsperrender Halbleiterschalter, d.h. bei einer Steuerspannung in einem Bereich um 0V befindet er sich in einem sperrenden Zustand. Dadurch ist in vorteilhafter Weise verhindert, dass bei einem Ausfall der Steuereinrichtung zum Steuern des Halbleiterschalters ein unkontrollierter Strom in dem Zwischenkreis fließt.

Mittels eines Halbleiterschalters ist es möglich, einen Überstrom im Zwischenkreis schnell genug zu unterbrechen, bevor Bauteile des Einspeise-Gleichrichters thermisch zerstört werden. Das im Zusammenhang mit FIG 1 beschriebene Schütz 12 ist hierzu zu langsam. Zum Aufladen des zumindest einen Zwischenkreiskondensators kann der Halbleiterschalter getaktet angesteuert werden. Er kann auch als gesteuerter Ladewiderstand für den zumindest einen Zwischenkreiskondensator betrieben werden.

Durch eine Steuereinrichtung 38 kann der Zwischenkreisschalter S_{ZK} gesteuert werden, die hierzu ein Steuersignal, z.B. einer Steuerspannung oder eines Steuerstromes, an einem Steuereingang des Zwischenkreisschalters S_{ZK}, also z.B. bei einem FET an dessen Gate, erzeugt.

Wechselspannungs-Eingänge E₁, E₂, E₃ des Einspeise-Gleichrichters 28 sind über Drosseln L₁, L₂, L₃ mit Netzanschlüssen N₁, N₂, N₃ des Frequenzumrichters 26 verbunden. Mit den Netzanschlüssen N₁, N₂, N₃ kann der Frequenzumrichter 26 an den Netzphasenleitern R, S, T des Netzes 14 angeschlossen werden. Durch die Drossel kann ein Filter gebildet und eine Kommutierungsinduktivität bereitgestellt sein.

Die Drosseln L₁, L₂, L₃ sind jeweils durch Schaltungszweige Z₁, Z₂, Z₃ überbrückt. In den Schaltungszweigen Z₁, Z₂, Z₃ ist jeweils ein Schalter S₁, S₂, S₃ eingebaut. Die Parallelschaltung aus der Drossel L₂ und dem Schalter S₂ sowie die Parallelschaltung aus der Drossel L₃ und dem Schalter S₃ entsprechen in ihrer Bauweise derjenigen der Parallelschaltung aus der Drossel L₁ und dem Schalter S₁. Deshalb wird im Folgenden nur auf diese Bezug genommen. Die Erläuterungen gelten in entsprechender Weise auch für die beiden übrigen Parallelschaltungen.

Der Schaltungszweig Z₁ verbindet einen Anschluss A₁ der Drossel L₁ mit ihrem zweiten Anschluss A₂. Durch Schließen des Schalters S₁ können die beiden Anschlüsse A₁, A₂ über den Schaltungszweig Z₁ miteinander kurzgeschlossen werden.

Der Schalter S₁ ist durch die Steuereinrichtung 38 steuerbar.

Der Übersichtlichkeit halber ist in FIG 2 nur für den Schalter S₁ eine entsprechende Steuerleitung angedeutet, nicht auch für die Schalter S₂ und S₃.

Beim Abschalten des Zwischenkreises 32 durch Öffnen des Zwischenkreisschalters S_{ZK} würde insbesondere dann, wenn während dessen ein großer Laststrom fließt, eine in den Drosseln L₁, L₂, L₃ gespeicherte Energie dazu führen, dass die Drosseln eine Induktionsspannung erzeugen. Es würde eine Überspannung am Zwischenkreisschalter S_{ZK} entstehen, durch die Bauteile im Einspeise-Gleichrichter 28 und der Zwischenkreisschalter S_{ZK} zerstört würden.

Bei dem Frequenzumrichter 26 ist eine solche Zerstörung vermieden. Es wird ein Strompfad nach oder beim Öffnen des Zwischenkreisschalters S_{ZK} bereitgestellt, indem die Schalter S₁, S₂, S₃ geschlossen werden, um die Energie der Drosseln L₁, L₂, L₃ aufgrund der ohmschen Drosselverluste und der Schaltverluste abzubauen. In dem gezeigten Beispiel wird kein Kommutierungskondensator im Zwischenkreis 32 benötigt, der die Energie aufnehmen können müsste. Ein Kommutierungskondensator 39 kann allerdings bereitgestellt sein, um beispielsweise einen Zeitversatz zwischen einem Schaltsignal für den Zwischenkreisschalter S_{ZK} und den Schaltern S₁, S₂, S₃ tolerieren zu können.

Mittels des Zwischenkreisschalters S_{ZK} kann auch im Fehlerfall, wenn beispielsweise ein Kurzschlussstrom mit großer Stromstärke aus dem Netz 14 in den Frequenzumrichter 26 fließt, dennoch geschaltet werden. Auch das Aufladen des Zwischenkreiskondensators 34 während einer Anlaufphase des Frequenzumrichters 26 oder nach einem kurzzeitigen Netzausfall kann über den Zwischenkreisschalter S_{ZK} gesteuert werden. Hierdurch kann die mittlere Stromstärke des Aufladestroms begrenzt werden. Hierbei kann der Zwischenkreisschalter S_{ZK} getaktet durch die Steuereinrichtung 38 angesteuert werden. Das hierdurch bewirkte abrupte Öffnen und Schließen des Zwischenkreisschalters S_{ZK} ist möglich, weil die Steuereinrichtung 38 die Schalter S₁, S₂, S₃ über entsprechende Steuersignale ebenfalls steuert, so dass ein Freilaufen der Drosseln L₁, L₂, L₃ gewährleistet ist.

Der in FIG 2 gezeigte Schalter S₁ ist nur symbolisch dargestellt. Im Folgenden werden einige Typen von Schaltern genauer erläutert, die als Schalter S₁ verwendet werden können. Gleiches gilt entsprechend auch für die beiden Schalter S₂ und S₃.

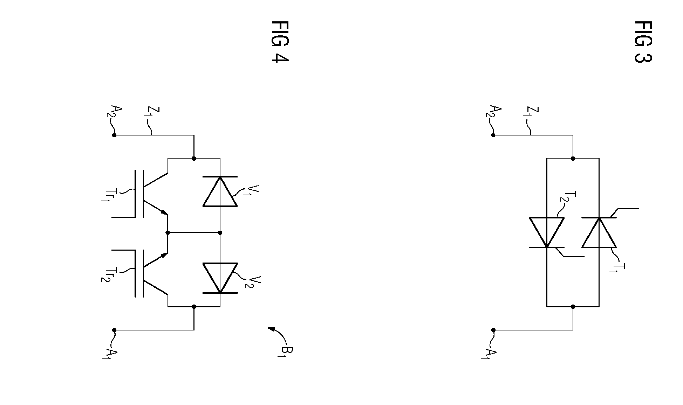

Der Schalter S₁ kann ein Diac, ein Triac, ein Thyristor, ein GTO oder aber auch ein IGBT oder ein FET oder eine Schaltung aus mehreren dieser Schaltelemente sein. In FIG 3 ist hierzu eine Anti-Parallelschaltung aus zwei Thyristoren T₁, T₂ gezeigt. Zur besseren Orientierung ist in FIG 3 durch die Bezugszeichen Z₁, A₁, und A₂ angedeutet, wie die antiparallel geschalteten Thyristoren T₁, T₂ in einem Frequenzumrichter verschaltet sind. Eine Steuerleitung für die Thyristoren T₁, T₂, die zu einer Steuereinrichtung führt und die der Steuereinrichtung 38 entspricht, sind in FIG 3 nicht dargestellt.

In FIG 4 ist in gleicher Weise gezeigt, wie durch eine Brückenschaltung B₁ ein Stromfluss sowohl in eine Flussrichtung als auch in die entgegengesetzte Flussrichtung jeweils über einen Halbleiter-Leistungsschalter Tr₁, Tr₂ (hier jeweils ein IGBT) und eine Diode V₁, V₂ führbar ist. Steuerleitungen, durch die jeweilige Gates der Halbleiter-Leistungsschalter Tr₁, Tr₂ mit einer Steuereinrichtung verbunden sind, sind nicht dargestellt. Die in FIG 3 und FIG 4 gezeigten Schalter sind Ausführungsbeispiele für einen bidirektionalen Schalter. Durch die Beispiele ist gezeigt, wie durch die Parallelschaltung eines Schalters zu einer Kommutierungsdrossel in einem Frequenzumrichter mit Zwischenkreisschalter erreicht werden kann, dass beim Öffnen des Zwischenkreisschalters die Energie der Kommutierungsdrosseln abgebaut werden kann, ohne dabei eine Überspannung im Frequenzumrichter zu erzeugen.

## Patentansprüche

1. Frequenzumrichter (26) zum Betreiben einer elektrischen Maschine (16) an einem elektrischen Versorgungsnetz (14), wobei der Frequenzumrichter (26) einen Einspeise-Gleichrichter (28) aufweist, dem an zumindest einem netzseitigen Wechselspannungs-Eingang (E₁, E₂, E₃) eine Drossel (L₁, L₂, L₃) vorgeschaltet ist, **dadurch gekennzeichnet, dass** ein erster und ein zweiter Anschluss (A₁,A₂) der Drossel (L₁, L₂, L₃) über einen Freilauf-Schaltungszweig (Z₁, Z₂, Z₃) wahlweise miteinander elektrisch verbindbar sind.

2. Frequenzumrichter (26) nach Anspruch 1, **dadurch gekennzeichnet, dass** der Freilauf-Schaltungszweig (Z₁, Z₂, Z₃) einen steuerbaren Schalter (S₁,S₂,S₃), insbesondere einen elektrischen oder elektromechanischen Schalter umfasst.

3. Frequenzumrichter nach Anspruch 1 oder 2, **dadurch gekennzeichnet , dass** der Freilauf-Schaltungszweig (Z₁, Z_{2,} Z₃) einen Halbleiterschalter (T₁, T₂, Tr₁, Tr₂) umfasst, insbesondere zumindest einen Diac, einen Triac, Thyristor (T₁,T₂), einen GTO-Thyristor, einen IGBT (Tr₁, Tr₂) oder einen FET.

4. Frequenzumrichter (26) nach einem der vorhergehenden Ansprüche, **dadurch gekennzeichnet,**
**dass** der Freilauf-Schaltungszweig (Z₁, Z₂, Z₃) eine Parallelschaltung aus zwei antiparallel geschalteten Bauelementen (T₁,T₂) oder aus zwei antiparallel geschalteten Reihenschaltungen mehrerer Bauelemente umfasst.

5. Frequenzumrichter (26) nach einem der vorhergehenden Ansprüche, **dadurch gekennzeichnet ,**
**dass** der Freilauf-Schaltungszweig (Z₁,Z₂,Z₃) eine Brückenschaltung (B₁) umfasst, bei welcher ein Stromfluss sowohl in eine Flussrichtung als auch in die entgegengesetzte Flussrichtung jeweils über einen Halbleiter-Leistungsschalter (Tr₁, Tᵣ2) und eine Diode (V₁, V₂) führbar ist.

6. Frequenzumrichter nach einem der vorhergehenden Ansprüche, **dadurch gekennzeichnet, dass** der Freilauf-Schaltungszweig ein Widerstandselement aufweist.

7. Frequenzumrichter (26) nach einem der vorhergehenden Ansprüche, **dadurch gekennzeichnet , dass** der Einspeise-Gleichrichter (28) mit einem Gleichspannungs-Zwischenkreis (32) verbunden ist, in welchem durch zumindest einen Zwischenkreiskondensator (34) eine Zwischenkreiskapazität bereitgestellt ist und welcher ein Schaltelement (S_{ZK}) aufweist, welches dazu ausgelegt ist, einen Stromfluss aus dem Einspeise-Gleichrichter (28) in den zumindest einen Zwischenkreiskondensator (34) wahlweise zu unterbrechen.

8. Frequenzumrichter nach Anspruch 7, **dadurch gekennzeichnet, dass** der Gleichspannungs-Zwischenkreis einen Kommutierungskondensator aufweist, durch welchen eine Kommutierungskapazität für den Einspeise-Gleichrichter bereitgestellt ist und welcher unabhängig von einem Schaltzustand des Schaltelements dauerhaft mit dem Einspeise-Gleichrichter elektrisch verbunden ist.

9. Verfahren zum Betreiben eines Frequenzumrichters (26) nach einem der vorhergehenden Ansprüche, bei welchem für den Fall, dass ein Strom in dem Frequenzumrichter (26) unterbrochen wird, mittels des Freilauf-Schaltungszweigs (Z₁, Z₂, Z₃) der erste Anschluss (A₁) der Drossel (L₁, L₂, L₃) mit deren zweiten Anschluss (A₂) elektrisch verbunden wird und hierdurch ein Stromfluss von dem zweiten Anschluss (A₂) über den Freilauf-Schaltungszweig (Z₁,Z₂,Z₃) zu dem ersten Anschluss (A₁) ermöglicht wird.

10. Verfahren nach Anspruch 9 zum Betreiben eines Frequenzumrichters (26) gemäß Anspruch 7 oder 8, **dadurch gekennzeichnet, dass** zum Unterbrechen eines Stromflusses in dem Gleichspannungs-Zwischenkreis (32) das Schaltelement (S_{ZK}) des Gleichspannungs-Zwischenkreises (32) in einen sperrenden Zustand geschaltet und hierbei bei der Drossel (L₁, L₂, L₃) der erste und der zweite Anschluss (A₁, A₂) über den Freilauf-Schaltungszweig (Z₁,Z₂,Z₃) elektrisch verbunden werden.
